# EUROPÄISCHE PATENTANMELDUNG

(11) **EP 3 822 105 A1**
(43) Veröffentlichungstag der Anmeldung: **19.05.2021**
(21) Anmeldenummer: 20207602.2
(22) Anmeldetag: 13.11.2020
(51) Int. Cl.: B60J 7/12, B60J 7/20

(54) **CABRIOLET-FAHRZEUG**

(30) Priorität: 16.11.2019 DE 102019131003
(71) Anmelder: Valmet Automotive Oy, 23500 Uusikaupunki (FI)
(72) Erfinder: Plassmeyer, Jörg, 49196 Bad Laer (DE)
(74) Vertreter: Kronthaler, Schmidt & Coll.

(57) **Zusammenfassung**

Es wird ein Cabriolet-Fahrzeug beschrieben, welches mit einem Verdeck, das zwischen einer einen Fahrzeuginnenraum überspannenden Verdeckschließstellung und einer den Fahrzeuginnenraum nach oben freigebenden Verdeckablagestellung verlagerbar ist, und mit wenigstens einem ersten Bauelement (8), welches bei einer Verdeckbewegung zwischen der Verdeckschließstellung und der Verdeckablagestellung bewegt wird, ausgebildet ist, wobei das erste Bauelement (8) mittels wenigstens eines Antriebs (15) um eine fahrzeugfeste Drehachse (A) zwischen einer ersten Position (P1) und wenigstens einer zweiten Position (P2) schwenkbar ist. Der Antrieb (15) ist zur Verschwenkung des ersten Bauelements (8) mittels einer Stellhebeleinrichtung (17) in einer ersten Drehrichtung (DR1) und einer entgegengesetzten zweiten Drehrichtung (DR2) betreibbar. Bei Betrieb in gleichbleibender Drehrichtung (DR1, DR2) erfolgt ab einer definierten Stellhebelposition (HP2) eine Bewegungsrichtungsumkehr des ersten Bauelements (8) zwischen der ersten Position (P1) und der zweiten Position (P2).

## Beschreibung

Die Erfindung betrifft ein Cabriolet-Fahrzeug mit einem Verdeck und mit wenigstens einem ersten Bauelement, welches mit einem Antrieb bei einer Verdeckbewegung zwischen einer Verdeckschließstellung und einer Verdeckablagestellung bewegt wird, nach der im Oberbegriff des Patentanspruches 1 näher definierten Art.

Aus der Praxis bekannte Cabriolet-Fahrzeuge umfassen üblicherweise ein Verdeck, das als ein sogenanntes Soft-Top-Verdeck mit einem aufspannbaren Verdeckbezug oder als ein sogenanntes Hard-Top mit starren Dachsegmenten ausgebildet sein kann und zwischen einer einen Fahrzeuginnenraum überspannenden Verdeckschließstellung und einer den Fahrzeuginnenraum nach oben freigebenden Ablagestellung verlagerbar ist. In Ablagestellung, d h. bei geöffnetem Verdeck, ist das Verdeck meist in einem heckseitigen Ablageraum, dem sogenannten Verdeckkasten angeordnet und darin zumindest teilweise von einem Verdeckkastendeckel, welcher zugleich auch ein Heck-Kofferraumdeckel sein kann, abgedeckt. Der Verdeckkastendeckel ist an wenigstens einem korrespondierenden Bauteil, in der Regel am Fahrzeugaufbau, verschwenkbar gelagert und relativ zu dem Verdeckkasten zwischen einer abgesenkten Abdeckstellung und wenigstens einer angehobenen Freigabestellung verschwenkbar.

Zum Verstellen des Verdecks ist ein Verdeckgestänge vorgesehen, welches in der Regel beidseits des Verdecks in Fahrzeuglängsrichtung eine Lenkeranordnung aufweist. Die Lenkeranordnung durchgreift während des Schließvorganges und in der Schließstellung des Verdecks eine jeweilige Gestängedurchtrittsöffnung, die heckseits seitlich am Fahrzeugaufbau, aber auch an einer Hutablage oder anderen Verkleidungselementen angeordnet sein kann.

Um derartige Gestängedurchtrittsöffnungen in der Ablagestellung des Verdecks abzudecken, werden sogenannte Gestängeklappen eingesetzt, welche durch einen zugeordneten Antrieb zwischen einer ausgeklappten Abdeckstellung und einer eingeklappten Offenstellung bewegbar sind.

In der Praxis wird die Gestängeklappe am Fahrzeugaufbau oder auch am Verdeckkastendeckel gehalten. Je nach Stellung des Verdecks kann sich die Gestängeklappe in ihrer Schließstellung bei geöffnetem Verdeck oder in ihrer Offenstellung bei geschlossenem Verdeck befinden, wobei sich der Verdecckastendeckel jeweils in seiner Abdeckstellung befindet.

Der Verdeckkastendeckel wird üblicherweise lediglich beim Verlagern des Verdecks in die Freigabestellung bewegt, so dass das Verdeck aus dem Verdecckasten ausgefahren und somit geschlossen oder in den Verdeckkasten eingefahren und somit geöffnet werden kann. Die Bewegungsabläufe können dabei sequenziell oder parallel erfolgen.

Der Antrieb unterschiedlicher im Zuge einer Verdeckbewegung bewegter Bauelemente wie z. B. Verdeckkastendeckel, Gestängeklappen, Hutablage, weitere Verkleidungs- oder Ausstattungselemente oder Schlösser wie ein Schloss eines Verdeckkastendeckels erfolgt bei Cabriolet-Fahrzeugen in der Serienproduktion meist mit unterschiedlichen Antrieben und zum Teil mit komplexen Mechanismen.

Für eine Gestängeklappe ist es beispielsweise aus der Praxis bekannt, diese mit einem separaten Elektromotor anzutreiben oder mit einem Seilzug mit dem Verdeckgestänge zu koppeln, so dass sie mit der Verdeckbewegung verlagert wird, das heißt beim Verlagern des Verdecks durch dieses selbst angetrieben wird. Der Gestängeklappenantrieb kann auch mit der Bewegung des Verdeckkastendeckels kombiniert sein, wie es z. B. in der DE 38 01 148 C1, der DE 10 2005 033 537 A1 und der DE 10 2013 111 924 A1 beschrieben ist.

Nachteilhafterweise benötigen die bekannten Lösungen mit ihren Bewegungsmechanismen eine große Anzahl von Bauteilen sowie einen hohen Montageaufwand. Die große Anzahl von Bauteilen führt des Weiteren auch zu einer erhöhten Fehleranfälligkeit, einem hohen Gewicht und hohen Kaufteilkosten.

Es ist Aufgabe der vorliegenden Erfindung, ein Cabriolet-Fahrzeug mit einem Verdeck und mit wenigstens einem ersten Bauelement, welches mit einem Antrieb bei einer Verdeckbewegung zwischen einer Verdeckschließstellung und einer Verdeckablagestellung bewegt wird, zu schaffen, wobei der Antrieb dieses ersten Bauelements hinsichtlich des konstruktiven Aufwands, der benötigten Teileanzahl und der Einbindung in die Bewegungsabläufe bei der Verdeckbewegung vereinfacht wird.

Diese Aufgabe wird durch ein Cabriolet-Fahrzeug mit den Merkmalen des Patentanspruches 1 gelöst. Weitere vorteilhafte Ausgestaltungen mit zweckmäßigen Weiterbildungen des erfindungsgemäßen Cabriolet-Fahrzeugs ergeben sich aus den weiteren Patentansprüchen.

Es ist somit ein Cabriolet-Fahrzeug vorgesehen mit einem Verdeck, das zwischen einer einen Fahrzeuginnenraum überspannenden Verdeckschließstellung und einer den Fahrzeuginnenraum nach oben freigebenden Verdeckablagestellung verlagerbar ist, und mit wenigstens einem ersten Bauelement, welches bei einer Verdeckbewegung zwischen der Verdeckschließstellung und der Verdeckablagestellung bewegt wird, wobei das erste Bauelement mittels wenigstens eines Antriebs um eine fahrzeugfeste Drehachse zwischen einer ersten Position und wenigstens einer zweiten Position schwenkbar ist. Erfindungsgemäß ist hierbei der Antrieb zur Verschwenkung des ersten Bauelements mittels einer Stellhebeleinrichtung in einer ersten Drehrichtung und einer entgegengesetzten zweiten Drehrichtung betreibbar, wobei bei Betrieb in gleichbleibender Drehrichtung ab einer definierten Stellhebelposition eine Bewegungsrichtungsumkehr des ersten Bauelements zwischen der ersten Position und der zweiten Position erfolgt.

Mit anderen Worten erfolgt ein Antrieb des Bauelements in einer Antriebsrichtung mit wechselnder Bewegungsrichtung des Bauelements, wobei der Bewegungsablauf des Bauteils auch mit umgekehrter Antriebsdrehrichtung durchgeführt werden kann.

Die erfindungsgemäße Lösung bietet den Vorteil, dass der Antrieb bei einer Verdeckbewegung mit wechselnder Bewegungsrichtung des bewegten Bauelements stark vereinfacht ist, so dass sich eine Bauteil- und Gewichtsersparnis bei einem entsprechend ausgebildeten Cabriolet-Fahrzeug ergibt.

Unter dem Begriff "bei einer Verdeckbewegung" sind dabei vorliegend alle im Rahmen einer Verdeckbewegung erfolgenden Bauelementbewegungen zu verstehen, d. h. auch solche, die vor oder nach der Bewegung des eigentlichen Verdecks erfolgen wie z. B. das Öffnen und Schließen eines Verdeckkastendeckels. Weiterhin ist unter der Verschwenkbarkeit des ersten Bauteils um eine fahrzeugfeste Drehachse vorliegend sowohl eine direkte Anbindung des ersten Bauteils an eine fahrzeugfeste Drehachse wie auch eine indirekte Anbindung, z. B. mittels eines Mehrgelenks, zu verstehen.

Bei einer vorteilhaften Ausführung kann der Antrieb über die Stellhebeleinrichtung mit dem ersten Bauelement derart verbunden sein, dass das erste Bauelement bei einer ersten Drehstellbewegung in der ersten Drehrichtung von der ersten Position bei einer ersten Stellhebelposition in die zweite Position bei einer zweiten Stellhebelposition verschwenkt wird, und bei einer anschließenden zweiten Drehstellbewegung in der ersten Drehrichtung bis zu einer dritte Stellhebelposition wieder in seine erste Position rückverschwenkt wird, und dass vorzugsweise das erste Bauelement bei entsprechenden ersten und zweiten Drehstellbewegungen in der zweiten Drehrichtung von der ersten Position bei der dritten Stellhebelposition in die zweite Position bei der zweiten Stellhebelposition und zurück in die erste Position bei der ersten Stellhebelposition verschwenkt wird.

Eine Drehstellbewegung in eine Drehrichtung kann dabei einen Winkel von maximal 180° einschließen, d. h. der maximale gesamte Verstellweg der ersten und zweiten Drehstellbewegung kann sich über 360° erstrecken, womit die dritte Stellhebelposition der ersten Stellhebelposition entsprechen kann. Je nach Anwendungsfall kann es aber vorteilhaft sein, kleinere Drehstellbewegungen von beispielsweise maximal 160° vorzusehen.

Die Erfindung ermöglicht es weiterhin, den Antrieb mehrerer Bauelemente auch mit unterschiedlichen Funktionalitäten zusammenzufassen. Es kann somit wenigstens ein zweites Bauelement bei einer Verdeckbewegung zwischen der Verdeckschließstellung und der Verdeckablagestellung bewegt werden, wobei das zweite Bauelement an dem ersten Bauelement relativ zu diesem beweglich gelagert sein kann und zwischen einer ersten Stellung und wenigstens einer zweiten Stellung verstellbar ist, und wobei zwischen dem ersten Bauelement und dem zweiten Bauelement eine Koppeleinrichtung vorgesehen ist, über die das zweite Bauelement beim Verschwenken des ersten Bauteils zwischen der ersten Stellung und der zweiten Stellung verstellbar ist.

Auf diese Weise wird nicht nur die Anzahl der Antriebe reduziert, sondern die solchermaßen zusammen angetriebenen Bauelemente können in vorteilhafter Weise als Modul vorgefertigt und in einer Vormontage beispielsweise am Fahrzeugaufbau oder einem Verdeckkastendeckel montiert und eingestellt werden. Damit reduziert sich die Fertigungszeit in der Fahrzeugfertigung und die Integration eines weiteren angetriebenen Bauelements kann ohne weitere zusätzliche elektrische bzw. elektronische Komponenten wie z. B. Schalter, Sensoren, Stellelemente erfolgen, womit an einem Steuergerät des Fahrzeuges keine weiteren Ein- bzw. Ausgänge implementiert werden müssen.

Bei einer zweckmäßigen Ausführung, welche sich insbesondere eignet, wenn das erste Bauelement als ein Verdeckkastendeckel und das zweite Bauelement als eine Gestängeklappe oder ein Verriegelungselement eines Verdecckastendeckelschlosses - nachfolgend auch verkürzt Verdeckkastendeckelschloss genannt - ausgeführt ist, kann in definierten Stellhebelpositionen das erste Bauelement in die erste Position oder zweite Position und diesen Positionen zugeordnet das zweite Bauelement in die erste Stellung oder zweite Stellung bewegt sein. Dabei kann das zweite Bauelement in einer der Stellhebelpositionen seine erste oder zweite Stellung einnehmen, während es in einer zweiten der Stellhebelpositionen die gleiche Stellung und in einer dritten der Stellhebelpositionen die jeweils abweichende Stellung einnimmt.

Wenngleich die Erfindung bei allen im Rahmen einer Verdeckbewegung bewegten Bauelementen Anwendung finden kann und jeweils zwei oder mehrere Antriebe zu einem Antriebssystem zusammenfassen kann, ist die Erfindung besonders vorteilhaft einzusetzen, wenn das erste Bauelement ein Verdecckastendeckel und das zweite Bauelement ein Verriegelungselement eines Verdeckkastendeckelschlosses oder eine Gestängeklappe ist, wobei das zweite Bauelement an dem Verdeckkastendeckel schwenkbar befestigt sein kann. Die Reduzierung der Anzahl der erforderlichen Antriebe und damit auch der erforderlichen Bauteile kommt in dem Fall besonders vorteilhaft zum Tragen, da ein im Stand der Technik hier besonders störender separater Antrieb der Gestängeklappe bzw. eine aufwendige Verlegung von Seilzügen zu einem Verdeckhauptlager oder eine komplexe Anbindung an die Verdeckdeckelkinematik entfallen kann.

Die erste Position des ersten Bauelements kann im Falle eines Verdecckastendeckels einer abgesenkten, einen Verdeckkasten schließenden Position des Verdeckkastendeckels und die zweite Position einer angehobenen, eine Öffnung des Verdeckkastens freigebenden Position des Verdeckkastendeckels entsprechen.

Die erste Stellung des zweiten Bauteils kann im Fall einer Gestängeklappe einer eingeklappten, eine Öffnung freigebenden Stellung der Gestängeklappe und die zweite Stellung einer ausgeklappten, eine Öffnung abdeckenden Stellung der Gestängeklappe oder jeweils umgekehrt einer ausgeklappten bzw. eingeklappten Stellung entsprechen. Im Fall eines Verdeckkastendeckelschlosses kann die erste Stellung des zweiten Bauteils eine Entriegelungsstellung und die zweite Stellung eine Verriegelungsstellung oder jeweils umgekehrt sein.

Wenn bei einer vorteilhaften Ausgestaltung der Erfindung wenigstens ein drittes Bauelement bei einer Verdeckbewegung zwischen der Verdeckschließstellung und der Verdeckablagestellung bewegt wird, wird das dritte Bauelement insbesondere bei einer Stellhebelposition in einem Winkelbereich bewegt, der außerhalb des Winkelbereichs der Drehstellbewegung zur Bewegung des ersten Bauelements und des zweiten Bauelements liegt. Das bedeutet beispielsweise für den Fall, dass der Verstellweg für das erste und zweite Bauelement z. B. einen Winkelbereich von 150° einnimmt, dass in einem Winkelbereich zwischen 150° und 180° die Betätigung bzw. Verstellung des dritten Bauelements erfolgen kann.

Das dritte Bauelement kann z. B. in Zusammenhang mit einem Verdecckastendeckel und einer Gestängeklappe als erstes und zweites Bauelement ein Verdeckkastendeckelschloss sein, für dessen Betätigung der Rest der Drehung der Abtriebswelle eines Antriebsmotors zwischen der Endlage der Verdeckkastendeckelbewegung und dem maximalen Drehwinkel von +/-180° genutzt wird.

Der Antrieb kann einen Motor aufweisen, der an dem ersten Bauelement oder fahrzeugfest angeordnet ist und an einem Drehpunkt der Stellhebeleinrichtung direkt oder mittels eines Getriebes angreift.

In einer zweckmäßigen Ausgestaltung ist der Motor derart ausgelegt, dass die gewünschte Funktion mit einem einzigen Motor umgesetzt werden kann. Bei einer Ausführung mit einem Verdeckkastendeckel kann der eine Motor z. B. einseitig am Verdeckkastendeckel oder zentral montiert sein.

Die Stellhebeleinrichtung mit der Koppeleinrichtung kann vorteilhafterweise eine eine Drehstellbewegung des Antriebs umsetzende Mehrgelenkkette zwischen einem mit dem ersten Bauteil verbundenen Drehgelenk und einem fahrzeugfesten Drehgelenk aufweisen, wobei die Mehrgelenkkette vorzugsweise mehrere Hebel, z. B. in der Form stangenartiger Elemente, und gegebenenfalls auch wenigstens ein Zugseil oder ein anderes geeignetes Übertragungselement enthalten kann.

Weitere Vorteile, Merkmale und Einzelheiten der Erfindung ergeben sich aus dem nachfolgend unter Bezugnahme auf die Zeichnung prinzipmäßig beschriebenen Ausführungsbeispiel.

Es zeigt:
- Fig. 1: eine vereinfachte Draufsicht auf ein erfindungsgemäß ausgebildetes Cabriolet-Fahrzeug mit einem geschlossenen Verdeck;
- Fig. 2: eine ausschnittsweise perspektivische Ansicht des Cabriolet-Fahrzeugs der Fig. 1 bei geöffnetem Verdeck;
- Fig. 3: eine vereinfachte Seitenansicht eines Ausschnitts des Verdecks gemäß Fig. 1 und Fig. 2 in Alleinstellung, wobei schematisch ein Verdeckkastendeckel und eine daran gehaltene Gestängeklappe bei geschlossenen Verdeckkastendeckel im geschlossenen Zustand des Verdecks und bei geöffnetem Verdeckkastendeckel während einer Verdeckbewegung gezeigt sind; und
- Fig. 4: eine der Fig. 3 entsprechende Darstellung des Verdeckkastendeckels und der Gestängeklappe bei geöffnetem Verdeckkastendeckel während einer Verdeckbewegung und bei geschlossenem Verdeckkastendeckel im geöffneten Zustand des Verdecks.

In den Figuren sind gleiche oder funktionsgleiche Elemente mit gleichen Bezugszeichen versehen.

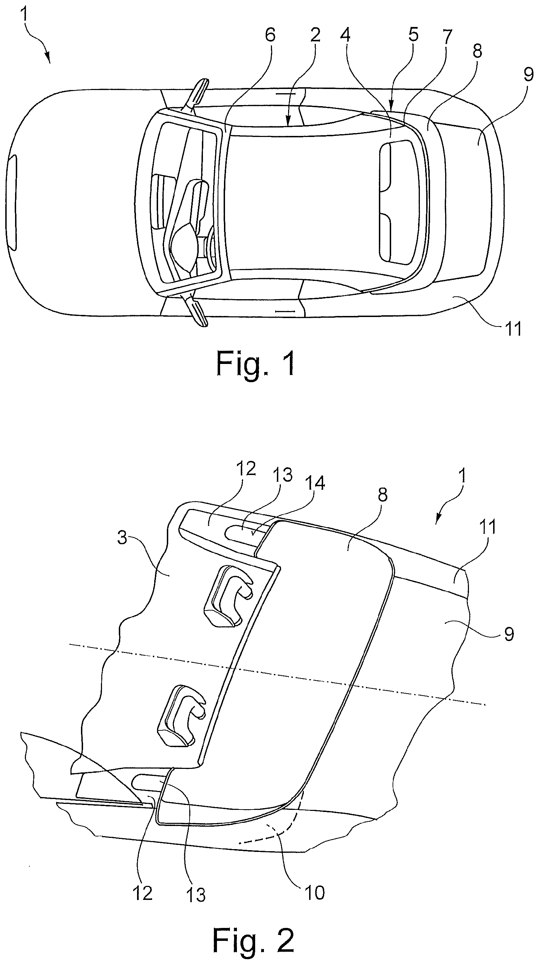

In Fig. 1 und Fig. 2 ist ein Cabriolet-Fahrzeug 1 mit einem Verdeck 2 ersichtlich, wobei das Verdeck 2 in Fig. 1 in einer einen Fahrgastraum bzw. Fahrzeuginnenraum 3 überdeckenden geschlossenen Position und in Fig. 2 in einer den Fahrzeuginnenraum 3 nach oben freigebenden offenen Position gezeigt ist.

Das hier als Soft-Top mit einem Verdeckbezug 4 ausgeführte Verdeck 2 ist in beliebiger Weise mittels eines Verdeckgestänges 5 zwischen der geschlossenen Position und einer in einem heckseitigen Ablageraum, welcher allgemein als Verdeckkasten 10 bezeichnet wird, angeordneten offenen Position verlagerbar.

Der Verdeckbezug 4 des Verdecks 2 erstreckt sich von einem Windschutzscheibenrahmen 6 entgegen einer Fahrzeugfrontrichtung bis zu einem Stoffhaltebügel bzw. Spannbügel 7 des Verdecks 2, der in geschlossener Verdeckposition oberhalb eines Verdeckkastendeckels 8 angeordnet ist, welcher an einer Karosserie bzw. einem Fahrzeugaufbau 11 nach oben aufschwenkbar gehalten ist. Heckseitig an den Verdeckkastendeckel 8 grenzt bei der dargestellten Karosserieform eine Heckklappe 9.

In Fahrtrichtung gesehen wird die Kontur des Verdeckkastendeckels 8 bzw. des Fahrzeugaufbaus 11 beidseitig um den Fahrzeuginnenraum 3 mit einer fahrzeugfesten Seitenverkleidung 12 fortgesetzt. In der Seitenverkleidung 12 ist eine bewegliche Klappe angeordnet, die nach der gebräuchlichen Terminologie als Gestängeklappe 13 bezeichnet wird und von der in Fig. 2 nur eine Gestängeklappenoberseite 14 sichtbar ist. Die Gestängeklappe 13 ist vorliegend an dem Verdeckkastendeckel 8 schwenkbeweglich gelagert.

Der Verdeckkastendeckel 8 bildet ein erstes Bauelement und die Gestängeklappe 13 ein zweites Bauelement, welches bei einer Verdeckbewegung zwischen der Verdeckschließstellung und der Verdeckablagestellung bewegt wird.

Bei einer Verdecköffnungsbewegung des Verdecks 2 wird zunächst der Spannbügel 7 von dem Verdeckgestänge 5 mit einem hinteren Endbereich in eine Öffnungsposition aufwärts verschwenkt, so dass anschließend der Verdeckkastendeckel 8 zur Freigabe des Verdeckkastens 10 für das Verdeck 2 verlagerbar ist. Bei geöffnetem Verdeckkastendeckel 8 wird das gesamte Verdeck 2 in den Verdeckkasten 10 verlagert, woraufhin der Verdeckkastendeckel 8 wiederum abgesenkt wird und das im Verdeckkasten 10 befindliche Verdeck 2 von oben abdeckt.

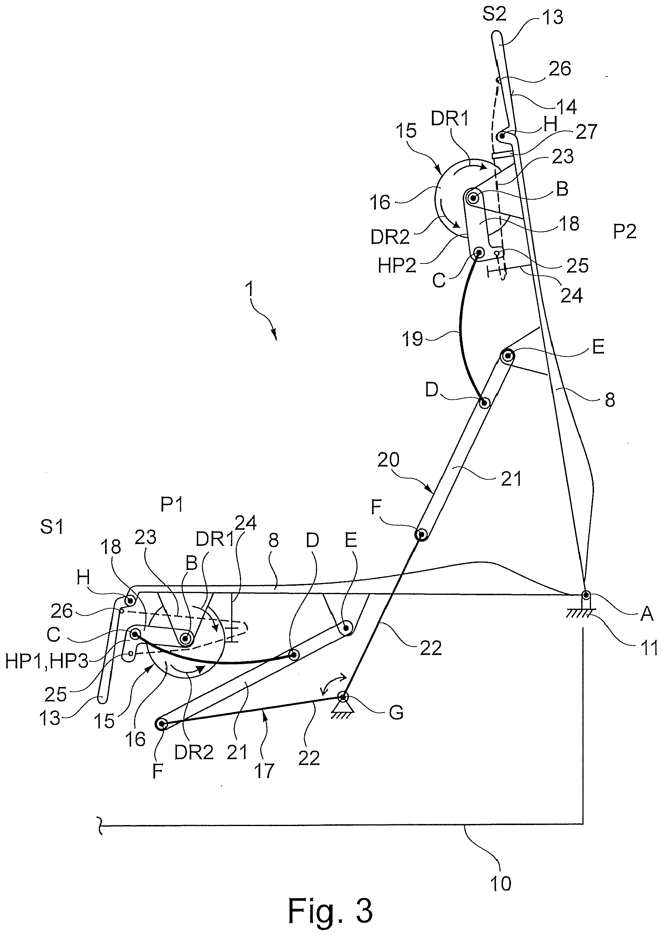

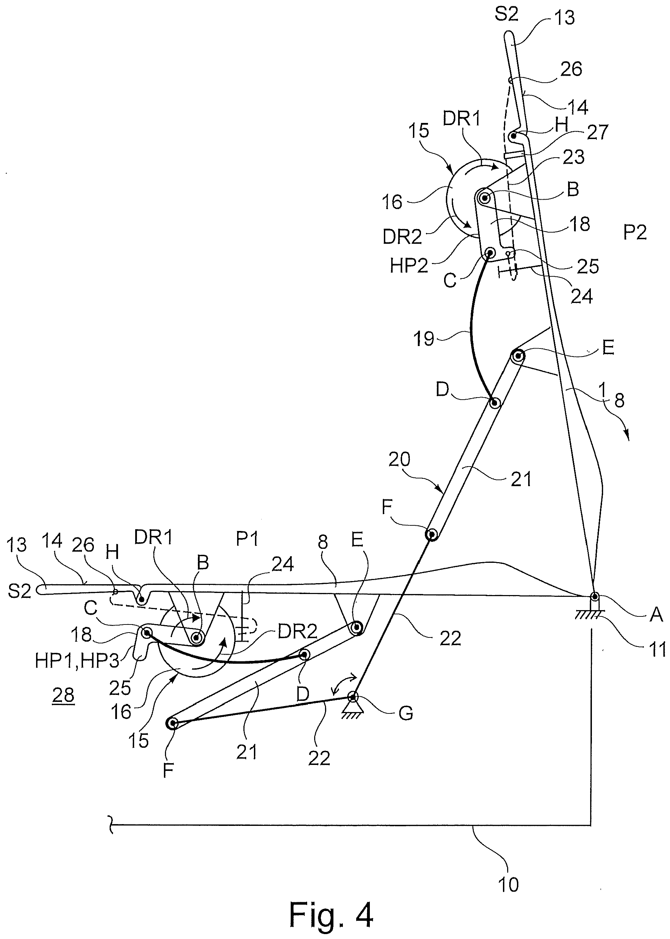

Die Bewegung des Verdeckkastendeckels 8 und der Gestängeklappe 13 bei der Verdecköffnungsbewegung und der Verdeckschließbewegung wird anhand der Fig. 3 und Fig. 4 nachfolgend näher beschrieben.

Die Fig. 3 und Fig. 4 zeigen den Verdeckkastendeckel 8 jeweils in einer ersten, abgesenkten Position P1 bei geschlossenem Verdeck 2 (Fig. 3) oder geöffnetem Verdeck (Fig. 4) und in einer zweiten, angehobenen bzw. geöffneten Position P2, welche eine Verdeckbewegung erlaubt. Der Verdeckkastendeckel 8 ist zwischen diesen Positionen mittels eines Antriebs 15, welcher als Motor vorliegend einen in zwei entgegengesetzte Drehrichtungen DR1, DR2 betreibbaren Elektromotor 16 aufweist, um eine fahrzeugfeste Drehachse A am Fahrzeugaufbau 11 im Bereich des Verdeckkastens 10 schwenkbar.

Der Antrieb 15 kann grundsätzlich jedwede Getriebe- bzw. Antriebsausgestaltung, z. B. mit einer Mehrgelenkkinematik, drehenden Wellen, einem Schnecken- /Spindel-/Zahnradgetriebe, einem Steigungskabel, usw. aufweisen.

Der Elektromotor 16 ist an dem Verdeckkastendeckel 8 gelagert. Hierdurch wird eine modulartige Vormontage des Verdeckkastendeckels 8 mit der Gestängeklappe 13 erleichtert. Die Lage der Abtriebswelle des Motors 16 kann jede sinnvolle Ausrichtung annehmen, insbesondere jedoch horizontal in Fahrzeuglängs- bzw. Fahrzeugquerrichtung oder vertikal bezogen auf die Fahrbahn. Dargestellt ist eine Lage normal zur Fahrzeugmittelebene.

Zur Verschwenkung des Verdeckkastendeckels 8 mittels des Elektromotors 16 weist der Antrieb 15 eine Stellhebeleinrichtung 17 mit einer Mehrgelenkkette zwischen einem hier direkt an einem Abtrieb des Elektromotors 16 und somit am Verdeckkastendeckel 8 angeordneten ersten Drehgelenk B und einem fahrzeugfesten Drehgelenk G auf. Die Mehrgelenkkette umfasst dabei in der gezeigten Ausführung einen Antriebshebel 18, einen Zwischenhebel 19 und ein Öffnungsgestänge 20, wobei der Antriebshebel 18 mit dem ersten Drehgelenk B und über ein weiteres Drehgelenk C mit dem Zwischenhebel 19 verbunden ist, und wobei der Zwischenhebel 19 an einem weiteren Drehgelenk D an dem ÖffnungsGestänge 20 angreift. Das Öffnungsgestänge 20 besteht hier aus zwei Öffnungshebeln 21, 22, wovon ein erster Öffnungshebel 21 über ein Drehgelenk E an dem Verdeckkastendeckel 8 gelagert ist und über ein Drehgelenk F mit dem zweiten Öffnungshebel 22 verbunden ist, welcher wiederum an einem Drehgelenk G an dem Fahrzeugaufbau 11 angelenkt ist.

Der Antrieb 15 mit der Stellhebeleinrichtung 17 ist so ausgelegt, dass bei Betrieb in gleichbleibender Drehrichtung DR1 bzw. DR2 ab einer definierten Stellhebelposition des Antriebshebels 18 eine Bewegungsrichtungsumkehr des Verdeckkastendeckels 8 zwischen der ersten, abgesenkten Position P1 und der zweiten angehobenen Position P2 erfolgt.

Beispielsweise wird zum Öffnen des Verdeckkastendeckels 8 aus der abgesenkten, den Verdeckkasten 10 schließenden Position P1 (jeweils links in Fig. 3 und Fig. 4) der Motor 16 mit dem Antriebshebel 18, welcher sich bei geschlossener Verdeckdeckelposition P1 in einer ersten Stellhebelposition HP1 befindet, in einer ersten Drehstellbewegung in der ersten Drehrichtung DR1 bewegt, bis der Antriebshebel 18 in eine definierte zweite Stellhebelposition HP2 verschwenkt ist, in der der Verdeckkastendeckel 8 seine zweite, geöffnete Position P2 erreicht hat (jeweils rechts in Fig. 3 und Fig. 4). Die Drehstellbewegung des Antriebshebels 18 erfolgt in der gezeigten Ausführung über einen Drehwinkel von 180°. Der Antriebshebel 18 dreht dabei vorzugsweise um eine annähernd horizontale Achse normal zur Fahrzeugmittelebene.

Wenn der Motor 16 den Antriebshebel 18 anschließend bei einer zweiten Drehstellbewegung in der selben ersten Drehrichtung DR1 bis zu einer definierten dritten Stellhebelposition HP3, welche bei einem wiederum 180° betragenden Drehstellwinkel der ersten Stellhebelposition HP1 entspricht, antreibt, wird der Verdeckkastendeckel 8 wieder in seine Schließposition P1 zurück verschwenkt.

Bei einem Betrieb des Motors 16 in entgegengesetzter Drehrichtung DR2 und einem Verstellweg des Antriebshebels 18 um einen Drehwinkel von 180° werden die Öffnungshebel 21, 22 des Öffnungsgestänges 20 in analoger Weise über den Zwischenhebel 19 aus einer eingeklappten Stellung in der Schließposition P1 des Verdeckkastendeckels 8 in eine Streckstellung in geöffneter Position P2 des Verdeckkastendeckels 8 überführt, und bei einer zweiten Drehstellbewegung um weitere 180° in der zweiten Drehrichtung DR2 wird der Verdeckkastendeckel mit einer Bewegungsrichtungsumkehr wieder in seine Schließposition P1 überführt.

Die Bewegung der Gestängeklappe 13 erfolgt gekoppelt mit der Bewegung des Verdeckkastendeckels 8. Die Gestängeklappe 13 ist zwischen einer ersten, eingeklappten Stellung S1 und einer zweiten, ausgeklappten Stellung S2 verstellbar. In der ersten, eingeklappten Stellung S1 gibt die Gestängeklappe 13 den Durchtritt des Verdeckgestänges 5 durch eine so genannte Gestängedurchtrittsöffnung 28 im Bereich der Seitenverkleidung 12 bzw. des Fahrzeugaufbaus 11 während einer Verdeckbewegung und bei geschlossenem Verdeck 2 frei. In der zweiten, ausgeklappten Stellung S2 deckt die Gestängeklappe 13 die Gestängedurchtrittsöffnung 28 bei geöffnetem Verdeck ab.

Zur Bewegungskopplung ist zwischen dem Verdeckkastendeckel 8 und der Gestängeklappe 13 eine Koppeleinrichtung vorgesehen, welche bei der vorliegenden Ausführung als ein Seilzug 23 ausgebildet ist, welcher einerseits mit einer Seilzuganbindung 24 an dem Verdeckkastendeckel 8 und andererseits mit einem Aufnahmepunkt 26 an der Gestängeklappe 13 verbunden ist.

Der Seilzug 23, welcher hier ausschließlich am Verdeckkastendeckel 8 und an der Gestängeklappe 13 befestigt ist, stellt einen so genannten Bowdenzug dar, welcher so ausgestaltet ist, dass er zur Verkürzung der Seillänge und mithin zum Einklappen der Gestängeklappe 13 während des Bewegungsablaufs des Verdeckkastendeckels in Eingriff mit einer entsprechenden Aufnahme 25 an dem Antriebshebel 18 gerät, so dass die Gestängeklappe 13 über den Seilzug 23 beim Verschwenken des Verdeckkastendeckels 8 zwischen der ersten, eingeklappten Stellung S1 und der zweiten, ausgeklappten Stellung S2 verstellbar ist, wobei die jeweilige Stellung S1, S2 der Gestängeklappe definierten Stellhebelpositionen HP1, HP2, HP3 des Antriebshebels 18 und der damit entsprechenden Position P1 bzw. P2 des Verdeckkastendeckels 8 zugeordnet ist.

Der Ablauf zur Bewegung der Gestängeklappe 13 in Verbindung mit der Bewegung des Verdeckkastendeckels 8 bei einer Öffnung des Verdecks 2 erfolgt bei dem in den Figuren ersichtlichen Ausführungsbeispiele in nachfolgend beschriebenen Schritten.

Das Verdeck 2 ist in der Ausgangslage geschlossen, der Verdeckkastendeckel 8 ist in erster Position P1 geschlossen, der Antriebshebel befindet sich in seiner ersten Stellhebelposition HP1 und die Gestängeklappen 13 sind in erster eingeklappter Stellung S1, wobei sich der Seilzug 23 in Eingriff mit der Aufnahme 25 an dem Antriebshebel 18, welche hakenartig ausgebildet sein kann, befindet.

Nach einem Signal zur Verdecköffnung wird der Antriebshebel 18 von dem Motor 16 in erster Drehrichtung DR1 um 180° in die zweite Stellhebelposition HP2 gedreht, wobei der Verdeckkastendeckel 8 infolge der Streckung des Öffnungsgestänges 20 in die geöffnete Position P2 bewegt wird, während der Seilzug 23 aus Eingriff mit der Aufnahme 25 an dem Antriebshebel 18 gerät und - wie in Fig. 3 ersichtlich - die hier mit Federkraft in Ausklapprichtung vorgespannte Gestängeklappe 13 in die zweite, ausgeklappte Stellung S2 bewegt wird. Das Verdeck kann dann in den Verdeckkasten 10 verlagert werden.

Selbstverständlich wäre hier auch eine umgekehrte Lage der Gestängeklappe 13 denkbar, d. h. eine eingeklappte Stellung bei geöffnetem Verdecckastendeckel 8, jedoch steht bei ausgeklappter Gestängeklappe 13 mehr Bewegungsraum für das Verdeck 2 zur Verfügung.

Wenn die Ablageposition des Verdecks 2 in dem Verdeckkasten sensorisch erkannt wird, erfolgt durch den Motor 16 eine weitere Drehstellbewegung um 180° in seine dritte Stellhebelposition HP3, welche der Ausgangslage entspricht. Der Verdeckkastendeckel 8 wird infolge des Einklappens des Öffnungsgestänges 20 in die geschlossene Position P1 bewegt, während der Seilzug 23 aus Eingriff mit der Aufnahme 25 an dem Antriebshebel 18 bleibt und die Gestängeklappe 13 in der ausgeklappten Stellung S2 verbleibt, so dass diese - wie in Fig. 4 ersichtlich - die Gestängedurchtrittsöffnung 28 abdeckt. Das Verdeck 2 ist somit in seiner Öffnungsstellung.

Die Bewegung von Verdeckkastendeckel 8 und Gestängeklappe verläuft bei dem beschriebenen Beispiel parallel, jedoch ist bei entsprechender Seilzugführung und Seilzuglänge auch eine versetzte Bewegungsabfolge realisierbar.

Zum Schließen des Verdecks 2 wird der Antriebsmotor 16 in die entgegengesetzte Drehrichtung DR2 bewegt, wobei sich der Antriebshebel 16 zunächst wiederum um 180° von der dritten bzw. ersten Stellhebelposition HP3 bzw. HP1 in die zweite Stellhebelposition HP2 bewegt und der Verdeckkastendeckel 8 durch das Öffnungsgestänge 20 in seine geöffnete Stellung P2 überführt wird, in der ein Ausfahren des Verdecks 2 aus dem Verdeckkasten 10 zur Aufspannung über dem Fahrzeuginnenraum 3 erfolgt. Die Gestängeklappe 13 verbleibt auf die oben beschriebene Weise in Ausklappstellung S2.

Wenn das Verdeck 2 ausgefahren ist, wird der Verdeckkastendeckel wieder geschlossenen, indem der Motor 16 den Antriebshebel in die gleiche Drehrichtung DR2 weiter um 180° verdreht und das Öffnungsgestänge 20 damit einklappt. Die Gestängeklappe 13 wird dabei wieder in die eingeklappte Stellung S1 bewegt, indem der Seilzug 13 mit dem Antriebshebel 18 gekoppelt wird und die Gestängeklappe 13 gegen die Federkraft eines nicht dargestellten Federelements relativ zu dem Verdeckkastendeckel 8 angewinkelt wird.

Vorliegend beträgt der Verstellwinkel bei einer Stellbewegung des Antriebshebels 18 180°, jedoch kann der Verstellwinkel beispielsweise auch nur 150° betragen.

Dies ist insbesondere dann vorteilhaft, wenn ein drittes Bauelement wie ein in der Fig. 3 nur symbolisch angedeutetes Verdeckkastendeckelschloss 27 mit dem Antrieb 15 bei einer Verdeckkastendeckelverlagerung zur Verdeckbewegung betätigt werden soll. Ein Verriegelungselement des Verdeckkastendeckelschlosses 27 kann dann mit dem Antriebshebel 18 so gekoppelt werden, dass dieses in dem Winkelbereich zwischen 150° und 180° entriegelt bzw. verriegelt wird. Auch hier wird die zusätzliche Bewegungssteuerung mit Bewegungsrichtungsumkehr durch die zuvor beschriebene Kopplung der Bewegungen bzw. durch einen "Freilauf" des Gestängeklappenantriebs erreicht.

Mit dem Antrieb des Verdeckkastendeckelschlosses 27, welches den Verdeckkastendeckel 8 in seinen geschlossenen Endstellungen P1 ent- bzw. verriegelt, kann der oben beschriebene Bewegungsablauf bei einer Verdeckbewegung dahingehend ergänzt werden, dass vor Verlagerung des Verdecckastendeckels 8 aus der geschlossenen Position P1 eine Entriegelung und nach Erreichen der geschlossenen Position P1 eine Verriegelung des Verdeckkastendeckels 8 erfolgt.

## Patentansprüche

1. Cabriolet-Fahrzeug mit einem Verdeck (2), das zwischen einer einen Fahrzeuginnenraum (3) überspannenden Verdeckschließstellung und einer den Fahrzeuginnenraum (3) nach oben freigebenden Verdeckablagestellung verlagerbar ist,
und mit wenigstens einem ersten Bauelement (8), welches bei einer Verdeckbewegung zwischen der Verdeckschließstellung und der Verdeckablagestellung bewegt wird, wobei das erste Bauelement (8) mittels wenigstens eines Antriebs (15) um eine fahrzeugfeste Drehachse (A) zwischen einer ersten Position (P1) und wenigstens einer zweiten Position (P2) schwenkbar ist,
**dadurch gekennzeichnet, dass** der Antrieb (15) zur Verschwenkung des ersten Bauelements (8) mittels einer Stellhebeleinrichtung (17) in einer ersten Drehrichtung (DR1) und einer entgegengesetzten zweiten Drehrichtung (DR2) betreibbar ist und bei Betrieb in gleichbleibender Drehrichtung (DR1, DR2) ab einer definierten Stellhebelposition (HP2) eine Bewegungsrichtungsumkehr des ersten Bauelements (8) zwischen der ersten Position (P1) und der zweiten Position (P2) erfolgt.

2. Cabriolet-Fahrzeug nach Anspruch 1,
**dadurch gekennzeichnet, dass** der Antrieb (15) über die Stellhebeleinrichtung (17) mit dem ersten Bauelement (8) derart verbunden ist, dass das erste Bauelement (8) bei einer ersten Drehstellbewegung in der ersten Drehrichtung (DR1) von der ersten Position (P1) bei einer ersten Stellhebelposition (HP1) in die zweite Position (P2) bei einer zweiten Stellhebelposition (HP2) verschwenkt wird und bei einer anschließenden zweiten Drehstellbewegung in der ersten Drehrichtung (DR1) bis zu einer dritten Stellhebelposition (HP3) wieder in seine erste Position (P1) rückverschwenkt wird,
und dass vorzugsweise das erste Bauelement (8) bei entsprechenden ersten und zweiten Drehstellbewegungen in der zweiten Drehrichtung (DR2) von der ersten Position (P1) bei der dritten Stellhebelposition (HP3) in die zweite Position (P2) bei der zweiten Stellhebelposition (HP2) und zurück in die erste Position (P1) bei der ersten Stellhebelposition (HP1) verschwenkt wird.

3. Cabriolet-Fahrzeug nach Anspruch 1 oder 2,
**dadurch gekennzeichnet, dass** eine Drehstellbewegung in eine Drehrichtung (DR1, DR2) einen Winkel von maximal 180°, insbesondere maximal 160°, einschließt.

4. Cabriolet-Fahrzeug nach einem der Ansprüche 1 bis 3,
**dadurch gekennzeichnet, dass** wenigstens ein zweites Bauelement (13) bei einer Verdeckbewegung zwischen der Verdeckschließstellung und der Verdeckablagestellung bewegt wird,
wobei das zweite Bauelement (13) an dem ersten Bauelement (8) relativ zu diesem beweglich gelagert ist und zwischen einer ersten Stellung (S1) und wenigstens einer zweiten Stellung (S2) verstellbar ist,
und wobei zwischen dem ersten Bauelement (8) und dem zweiten Bauelement (13) eine Koppeleinrichtung (23) vorgesehen ist, über die das zweite Bauelement (13) beim Verschwenken des ersten Bauteils (8) zwischen der ersten Stellung (S1) und der zweiten Stellung (S2) verstellbar ist.

5. Cabriolet-Fahrzeug nach Anspruch 4,
**dadurch gekennzeichnet, dass** in definierten Stellhebelpositionen (HP1, HP2, HP3) das erste Bauelement (8) in die erste Position (P1) oder zweite Position (P2) und diesen Positionen zugeordnet das zweite Bauelement (13) in die erste Stellung (S1) oder zweite Stellung (S2) bewegt ist.

6. Cabriolet-Fahrzeug nach Anspruch 4 oder 5,
**dadurch gekennzeichnet, dass** das zweite Bauelement (13) in einer der Stellhebelpositionen (HP1, HP2, HP3) in seine erste oder zweite Stellung (S1, S2) bewegt ist, während es in einer zweiten der Stellhebelpositionen (HP1, HP2, HP3) in die gleiche Stellung (S1, S2) und in einer dritten der Stellhebelpositonen (HP1, HP2, HP3) in die jeweils abweichende Stellung (S2, S1) bewegt ist.

7. Cabriolet-Fahrzeug nach einem der Ansprüche 4 bis 6,
**dadurch gekennzeichnet, dass** wenigstens ein drittes Bauelement (27) bei einer Verdeckbewegung zwischen der Verdeckschließstellung und der Verdeckablagestellung bewegt wird, wobei das dritte Bauelement (27) insbesondere bei einer Stellhebelposition in einem Winkelbereich bewegt wird, der außerhalb des Winkelbereichs der Drehstellbewegung zur Bewegung des ersten Bauelements (8) und des zweiten Bauelements (13) liegt, wobei insbesondere entweder das zweite Bauelement (13) oder das dritte Bauelement (27) im Bewegungsbereich des ersten Bauelements (8) bewegt wird.

8. Cabriolet-Fahrzeug nach einem der Ansprüche 1 bis 7,
**dadurch gekennzeichnet, dass** das erste Bauelement als ein Verdecckastendeckel (8) ausgeführt ist, das zweite Bauteil insbesondere als eine Gestängeklappe (13) oder ein Verdeckkastendeckelschloss (27) ausgeführt ist.

9. Cabriolet-Fahrzeug nach einem der Ansprüche 7 oder 8,
**dadurch gekennzeichnet**, das dritte Bauelement als ein Verdeckkastendeckelschloss (27) ausgeführt ist.

10. Cabriolet-Fahrzeug nach Anspruch 8 oder 9,
**dadurch gekennzeichnet, dass** die erste Position (P1) des Verdecckastendeckels (8) einer abgesenkten, einen Verdeckkasten (10) schließenden Position und die zweite Position (P2) des Verdeckkastendeckels (8) einer angehobenen, eine Öffnung des Verdeckkastens (10) freigebenden Position entspricht.

11. Cabriolet-Fahrzeug nach einem der Ansprüche 8 bis 10,
**dadurch gekennzeichnet, dass** die erste Stellung (S1) der Gestängeklappe (13) einer eingeklappten, eine Öffnung (28) freigebenden Stellung und die zweite Stellung (S2) der Gestängeklappe (13) einer ausgeklappten, eine Öffnung (28) abdeckenden Stellung oder jeweils umgekehrt einer ausgeklappten bzw. eingeklappten Stellung entspricht.

12. Cabriolet-Fahrzeug nach einem der Ansprüche 1 bis 11,
**dadurch gekennzeichnet, dass** der wenigstens eine Antrieb (15) einen Motor (16) umfasst, der an dem ersten Bauelement (8) oder fahrzeugfest angeordnet ist.

13. Cabriolet-Fahrzeug nach einem der Ansprüche 1 bis 12,
**dadurch gekennzeichnet, dass** die Stellhebeleinrichtung (17) eine eine Drehstellbewegung des Antriebs (15) umsetzende Mehrgelenkkette (18, 19, 20) zwischen einem mit dem ersten Bauteil (8) verbundenen Drehgelenk (C) und einem fahrzeugfesten Drehgelenk (G) aufweist.
